# EUROPEAN PATENT APPLICATION

(11) **EP 4 520 165 A1**
(43) Date of publication of application: **12.03.2025**
(21) Application number: 24199173.6
(22) Date of filing: 09.09.2024
(51) Int. Cl.: A01G 20/43, A01B 45/00

(54) **TURF GROOMING APPARATUS AND IMPLEMENT THEREFOR**

(30) Priority: 07.09.2023 US 202363537191 P
(71) Applicant: Forward Innovation Inc., Listowel, Ontario N4W 3G9 (CA)
(72) Inventor: TOLLENAAR, Evan Adrian, Monkton, N0K 1P0 (CA); ROTHWELL, Benjamin, Listowel, N4W 3G9 (CA); KOCH NICHOL, Kaedyn, Atwood, N0G 1B0 (CA); VAN VEEN, Philip, Listowel, N4W 1S8 (CA)
(74) Representative: Barker Brettell LLP

(57) **Abstract**

Disclosed herein are turf grooming systems (100), devices, and methods, the system including at least one grooming device (200), each comprising a rotary brush (230) and an interchangeable assembly (220; 240), wherein the rotary brush is drivingly connectible to at least one drive wheel (300), wherein at least one of the at least one grooming device is liftable by pivoting about a pivot point. Each grooming device can also include a magnet assembly (210).

## Description

### TECHNICAL FIELD

The present disclosure relates to turf grooming apparatuses, and, in particular, to a turf grooming apparatus having a folding mechanism for use with multi-functional turf surface grooming implements.

### BACKGROUND

Surfaces such as turf can be difficult to maintain especially after continued or impactful use. Venues with turf surfaces such as fields are often booked for different purposes with little time between to maintain the turf. For example, a turf can be used for a sporting event, such as soccer, and subsequently used for another sporting event or for a performance in quick succession. The quality and maintenance of certain properties of turf can be critical for the suitability of the turf for the intended use. For example, the impact absorption, hardness, stability, and compression properties of turf, distribution and alignment of turf fibers, as well as other properties can be important determinants as to the quality, frequency of maintenance, and lifespan of the turf. These properties can deteriorate after use of the turf. Furthermore, debris can accumulate at the surface of the turf.

Some of these properties can be restored at least to a degree by maintenance performed on the turf. For example, large rakes have been used on turf to help decompact the turf, following which, and separately, debris can be removed from the surface of the turf.

### SUMMARY

In accordance with an aspect, there is provided a turf grooming system, the system including: at least one grooming device, each comprising a rotary brush and an interchangeable assembly, wherein the rotary brush is drivingly connectible to at least one drive wheel, wherein at least one of the at least one grooming device is liftable by pivoting about a pivot point.

In some embodiments, one or more of the grooming device(s) further includes a magnet assembly.

In some embodiments, the interchangeable assembly comprises a tine assembly.

In some embodiments, the interchangeable assembly comprises a debris collection assembly.

In some embodiments, each grooming device includes a frame, wherein the at least one drive wheel is positionable at a front end of the frame, the interchangeable assembly is positionable behind the at least one drive wheel, the rotary brush is positionable behind the interchangeable assembly, and magnet assembly is positionable behind the rotary brush, wherein the at least one drive wheel comprises a first drive wheel connectible to a side of the frame and a second drive wheel connectible to an opposite side of the frame.

In some embodiments, the system further includes a drive connector drivingly connectible to the turf grooming system.

In some embodiments, a drive wheel is connectible to the rotary brush via a chain and sprocket system configured to rotate the rotary brush in a direction opposite to a rotation of the drive wheel.

In some embodiments, the system includes a vibrating motor connectible to interchangeable assembly.

In some embodiments, the rotary brush is raiseable relative to a surface over which grooming device is moved.

In some embodiments, the pivoting of the grooming device transitions the grooming device between a horizontal position and a vertical position.

In some embodiments, the pivot point comprises a shipping pivot point and an operational pivot point.

In some embodiments, the shipping pivot point includes shipping holes configured to receive shipping pins and the operational pivot point comprises operational holes configured to receive operational pins.

In accordance with an aspect, there is provided a method for grooming turf, the method including: providing decompaction of the turf by brushing; providing deep grooming of the turf or surface cleaning of the turf or both; and providing an attractive force magnetically over a turf; by driving a single vehicle.

In some embodiments, the deep grooming is by lifting the turf beneath a surface of the turf.

In some embodiments, the surface cleaning includes the brushing and collecting of debris at the surface of the turf.

In some embodiments, the turf is driven over by the vehicle in the same direction as the brushing of the turf.

In some embodiments, the surface cleaning includes vibrating debris collected.

In some embodiments, the method includes adjusting a height over the turf at which the brushing is performed.

In some embodiments, the method includes pivoting the vehicle between a horizontal operational position and a vertical shipping position.

In some embodiments, the pivoting is about a pivot point and the pivot point comprises a shipping pivot point and an operational pivot point.

### BRIEF DESCRIPTION OF THE DRAWINGS

For a better understanding of the nature and objects of the embodiments of the present disclosure, reference should be made to the detailed description taken in conjunction with the accompanying drawings.
FIG. 1 is a side view of turf grooming system, in accordance with some embodiments;
FIG. 2 is a side view of turf grooming system, in accordance with some embodiments;
FIG. 3 is a perspective view of a pivot mechanism of turf grooming system, in accordance with some embodiments;
FIG. 4 is a perspective view of a pivot mechanism of turf grooming system, in accordance with some embodiments;
FIG. 5 is a top perspective view of a grooming device of turf grooming system, in accordance with some embodiments;
FIG. 6 is a perspective view of an interchangeable assembly of turf grooming system, in accordance with some embodiments;
FIG. 7 is a schematic view of a brush of turf grooming system, in accordance with some embodiments;
FIG. 8 is a perspective view of turf grooming system, in accordance with some embodiments;
FIG. 9 is a side view of turf grooming system, in accordance with some embodiments;
FIG. 10 is a front view of turf grooming system, in accordance with some embodiments;
FIG. 11 is a top view of turf grooming system, in accordance with some embodiments;

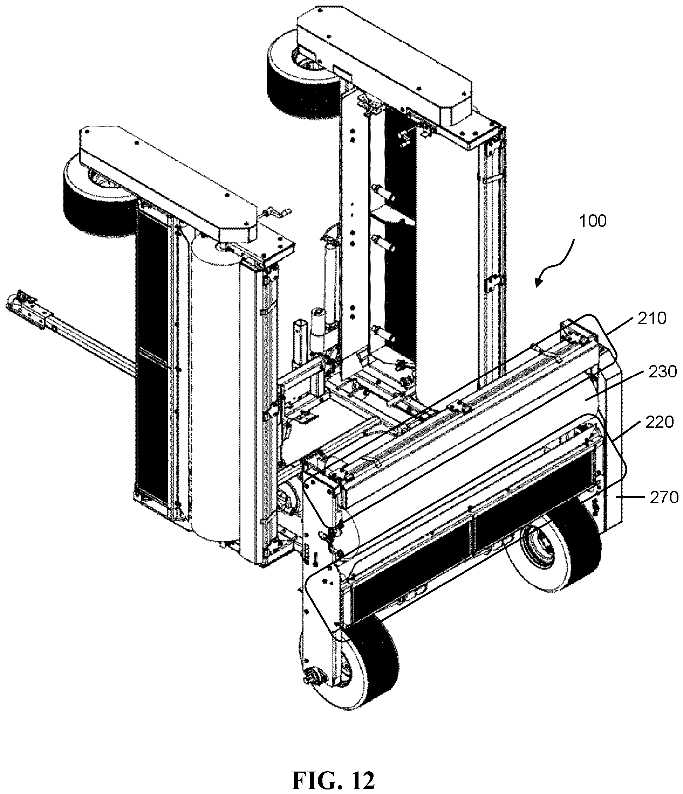

FIG. 12 is a rear perspective view of turf grooming system, in accordance with some embodiments;
FIG. 13 is a top view of turf grooming system, in accordance with some embodiments;
FIG. 14 is a top perspective view of turf grooming system, in accordance with some embodiments;
FIG. 15 is a rear perspective view of turf grooming system, in accordance with some embodiments;
FIG. 16 is a top view of turf grooming system, in accordance with some embodiments;
FIG. 17 is a front perspective view of turf grooming system, in accordance with some embodiments;
FIG. 18 is a top perspective view of turf grooming system, in accordance with some embodiments;
FIG. 19 is a top perspective view of a grooming device of turf grooming system, in accordance with some embodiments;
FIG. 20 is a top perspective view of a grooming device of turf grooming system, in accordance with some embodiments;
FIG. 21 is a perspective view of a tine assembly of turf grooming system, in accordance with some embodiments;
FIG. 22 is a side view of a tine assembly of turf grooming system, in accordance with some embodiments;
FIG. 23 is a side view of a grooming device of turf grooming system, in accordance with some embodiments;
FIG. 24 is a top perspective view of a debris collection assembly of turf grooming system, in accordance with some embodiments;

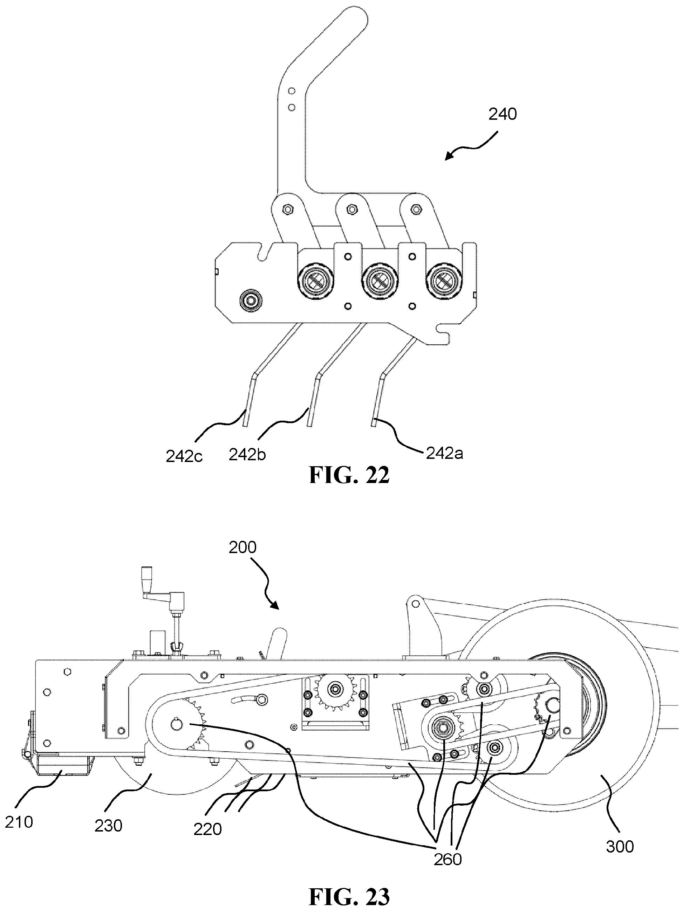

FIG. 23 is a top perspective view of a frame of a debris collection assembly of turf grooming system, in accordance with some embodiments;

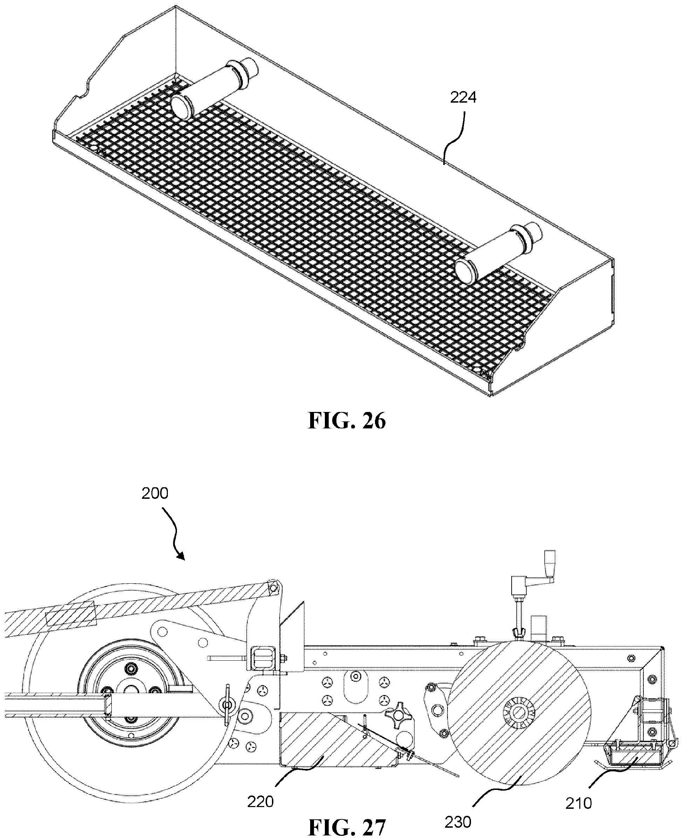

FIG. 26 is a top perspective view of a collection basket of a debris collection assembly of turf grooming system, in accordance with some embodiments;
FIG. 27 is a side sectional view of a grooming device of turf grooming system, in accordance with some embodiments; and

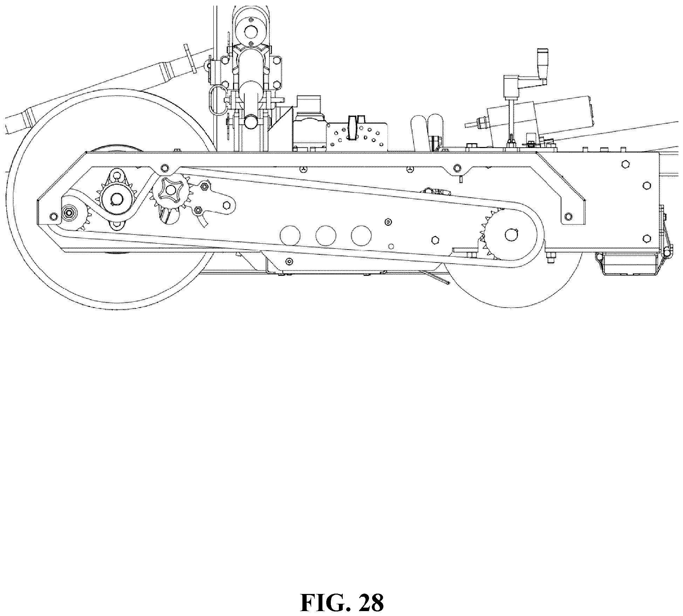

FIG. 28 is a side view of a grooming device of turf grooming system, in accordance with some embodiments.

### DETAILED DESCRIPTION OF PARTICULAR EMBODIMENTS

In this respect, before explaining at least one embodiment in detail, it is to be understood that the embodiments are not limited in its application to the details of construction and to the arrangements of the components set forth in the following description or illustrated in the drawings. The technology is capable of other embodiments and of being practiced and carried out in various ways.

Also, it is to be understood that the phraseology and terminology employed herein are for the purpose of description and should not be regarded as limiting. In particular, all terms used herein are used in accordance with their ordinary meanings unless the context or definition clearly indicates otherwise. Also, unless indicated otherwise except within the claims the use of "or" includes "and" and vice-versa. Non-limiting terms are not to be construed as limiting unless expressly stated or the context clearly indicates otherwise (for example, "including", "having", "characterized by" and "comprising" typically indicate "including without limitation"). Singular forms included in the claims such as "a", "an" and "the" include the plural reference unless expressly stated or the context clearly indicates otherwise. Further, the stated features and/or configurations or embodiments thereof the suggested intent may be applied as seen fit to certain operating conditions or environments by one experienced in the field of art.

As used herein, an assembly or subassembly can refer to a single integral unit or a unit with multiple parts.

As used herein, a turf can refer to turf or another surface.

In some embodiments, the present disclosure relates to an all-in-one turf grooming system that corrects fiber orientation, distributes infill, and removes debris to create the best performing surface, prolong turf life, and create an aesthetically pleasing turf appearance.

In some embodiments, the apparatus of the present disclosure provides multi-functionality and optional large working width. Apparatuses of the prior art variety are typically either used for decompacting the infill material and correcting fiber orientation, or for debris cleaning the surface. In contrast, in some embodiments, the apparatus disclosed herein can carry out both functions at the same time, and features quick interchangeable units to focus on deep grooming (using tine assemblies) or debris cleaning (using collection baskets). In addition, in some embodiments, a rotary brush is specifically designed for this application, creating improved results with standardized compaction testing equipment.

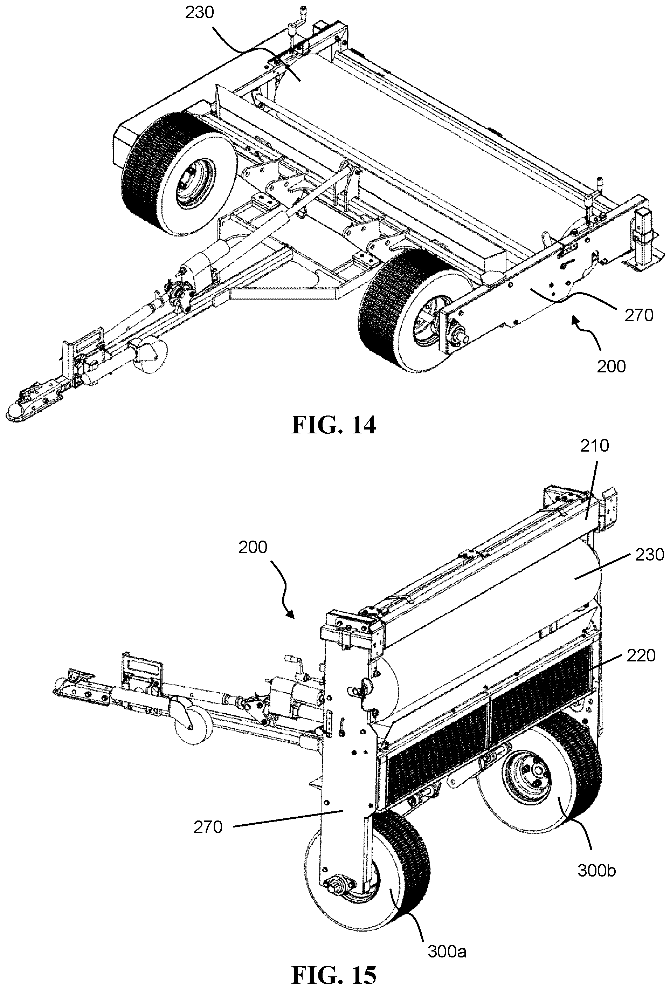

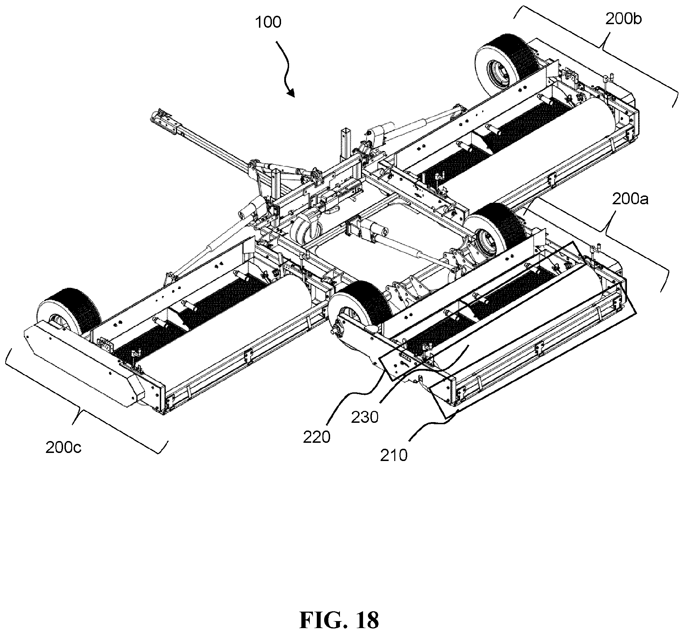

In some embodiments, there is provided a turf grooming system 100, including: at least one grooming device 200, each including a brush 230, a magnet assembly 210, and an interchangeable assembly, wherein the brush 230, is drivingly connectible to at least one drive wheel 300, wherein at least one of the at least one grooming device 200 is liftable by pivoting about a pivot point. In some embodiments, brush 230 is a rotary brush. Example configurations of turf grooming system 100 are shown in FIG. 14, which shows turf grooming system 100 comprising a single grooming device 200, as well as in FIG. 18, which shows turf grooming system 100 comprising a rear grooming device 200a that is positioned behind two side wing grooming devices 200b and 200c, relative to the direction of travel during operation of turf grooming system 100. In some embodiments, one or more of brush 230, magnet assembly, and interchangeable assembly are removable or interchangeable with a replacement component. For example, an attachment mechanism between each of these components and frame 270 of grooming device 200 can be loosened and/or removed to release the component. In some embodiments, the interchangeable assembly comprises a tine assembly 240. In some embodiments, the interchangeable assembly comprises a debris collection assembly 220.

In some embodiments, the interchangeable assembly comprises both a debris collection assembly 220 and a tine assembly 240. For example, interchangeable assembly can be in a modified form comprising a row(s) of tines (e.g., a single row) positioned adjacent (e.g., in front or behind to work in tandem) to a debris collection assembly 220, where the row(s) of tines are configured to vibrate the collection screen of the debris collection assembly 220 for improved debris filtration, not necessarily or only for deep grooming of the surface.

In some embodiments, magnet assembly 210 is omitted.

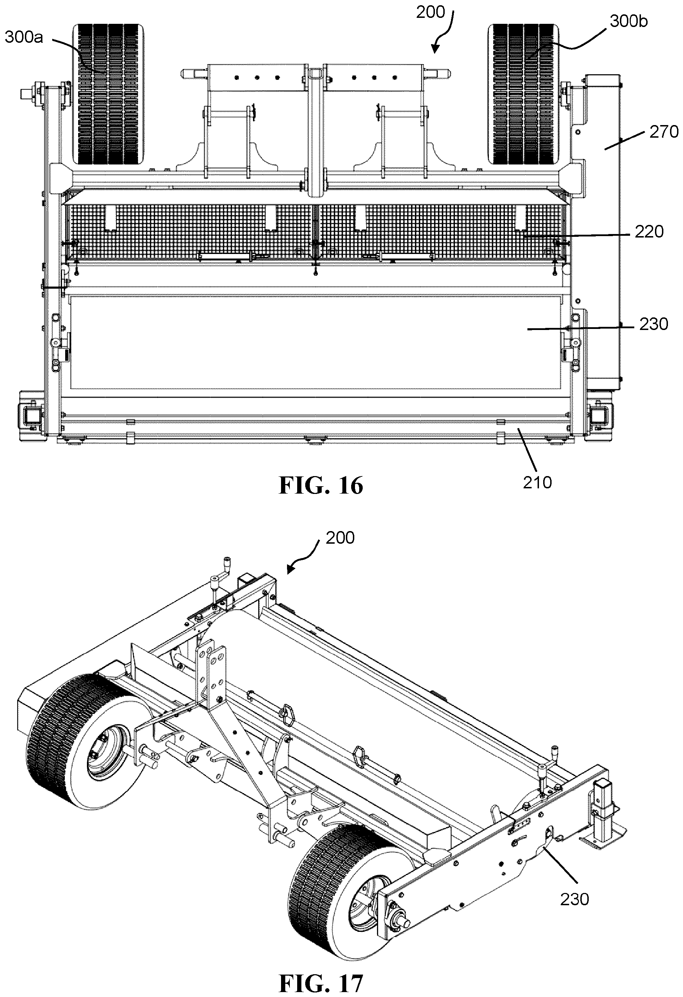

According to some embodiments, FIG. 16 depicts an example configuration of a grooming device 200 and, in particular, a sole grooming device 200 or a rear grooming device 200a. Similar to that shown in FIG. 16, each grooming device 200 comprises a frame 270 connectible to at least one drive wheel 300, where each drive wheel 300 is positionable at a front end of the frame 270, the interchangeable assembly (e.g., debris collection assembly 220 or tine assembly 240) is positionable behind the at least one drive wheel 300, the brush 230 is positionable behind the interchangeable assembly, and magnet assembly 210 is positionable behind the brush 230, wherein the at least one drive wheel 300 comprises a first drive wheel 300a connectible to a side of the frame 270 and a second drive wheel 300b connectible to an opposite side of the frame 270. As used herein, the relative positions of components are indicated relative to a direction of movement of turf grooming system 100 during typical operation. Frame 270 can form a perimeter frame around brush 230 and interchangeable assembly, with magnet assembly 210 comprising or at a rear portion of the frame 270. In some embodiments, the order in which the components (e.g., tine assembly 240, debris collection assembly 220, brush 230, magnet assembly 210) are positioned can be different than described or shown. However, although not required, the order may be selected to improve the use of grooming device 200, such as to prevent undesired compaction by grooming device 200 or any of its components or its operation or otherwise hindered function. For example, drive wheels 300 may be positioned in front of brush 230 such that drive wheels 300 do not drive over and compact surface that has already been operated on by brush 230. As another example of an alternate positioning of components, magnet assembly 210 may be positioned in front of brush 230 or the interchangeable assembly. In some embodiments, brush 230 is positioned in front of the interchangeable assembly, and brush 230 rotates the same direction as the direction of travel.

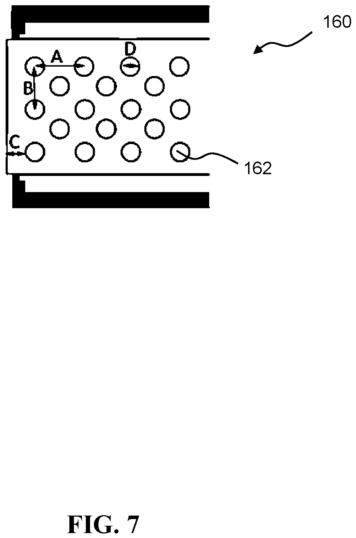

In some embodiments, brush 230 is configured to move along a surface during operation of turf grooming system 100, such as to decompact and distribute infill. Brush 230 is configured to rotate and engage with a surface as turf grooming system 100 is moved along the surface, according to some embodiments. Brush 230 can engage with the surface, lift or decompact the surface, align fibers of the surface, and/or distribute infill placed on or located at the surface such as to create a more even, homogenous, or consistent surface. Compaction testing with brush 230 shows superior performance. In some embodiments, a tufted brush 230 with a core OD between 2.5-4", 0.6-1.2 mm bristles for a brush OD of 8-15" is utilized. FIG. 7 is a schematic view of an example brush 230, according to some embodiments, where brush 230 comprises tufted holes 162 that are 6-10 mm in diameter (D) with 18-30 rows of bristles (spacing of B is roughly 15-25 mm) and where A is 12-24mm. In some embodiments, other configurations of brushes can be used. For example, brush 230 can be a tufted brush. Tufted brush can include a "twist" on the rows to reduce bouncing caused by the individual rows of bristles (e.g., basically eliminating straight rows), and then including a design that mirrors the pattern in the middle. The tufted holes 162 can be in a circular pattern, such as a circular pattern of 10 or in a range of 8-15, for example.

The relative height of brush 230 relative to the surface can be configured by raising or lowering brush 230. For example, in some embodiments, there is a handle on each side of the frame, attached to a threaded rod. Turning this raises or lowers a plate on which the brush 230 bearings are mounted to, effectively raising or lowering the brush 230 relative to the surface (while the frame is lowered fully for operation and raised for transportation). In some embodiments, other mechanical mechanisms can be used to raise or lower a height of brush 230 from the surface. In some embodiments, the frame can be partially raised to disengage tines 242 and brush 230 for turning during operation (optional for brush if desired). In some embodiments, the height of brush 230 can also be raised or lowered by pivoting, relative to a midframe of turf grooming system 100, the grooming device 200 that brush 230 is included in. For example, in some embodiments, this is performed by using a lifting and folding mechanism as described herein, such as by partially raising the grooming system 200 relative to the surface. Such raising can be for ground clearance or to disengage (e.g., tines 242 and/or brush 230) from the surface. This can be by lifting the entire frame. In some embodiments, this is instead by lifting the desired assembly (separate from the entire frame), such as the interchangeable assembly or brush 230. In some embodiments, rotary brush 230 is raiseable relative to a frame 270 of grooming device 200.

FIG. 23 shows brush 230 driven by an example chain and sprocket system 260 from ground drive wheel 300, in accordance with some embodiments. In some embodiments, at least one drive wheel 300 is connectible to the rotary brush via a chain and sprocket system 260 configured to rotate the rotary brush 320 in a direction opposite to a rotation of the drive wheel 300. For example, as shown in FIG. 23, in some embodiments, a double single idler sprocket is used within a two chain drivetrain to reverse the direction of brush 230 relative to the drive wheel 300 without the use of a chain tensioner. This also advantageously optimizes ground clearance when sole grooming device 200 or rear grooming device 200a (containing rear brush frame 270) is folded vertically. The brush 230 heights are adjustable relative to the ground, but do not require the drivetrain to be adjusted. In some embodiments, brush 230 is rotated in a direction opposite relative to drive wheel 300 using a different mechanism. For example, in some embodiments, the drive chain is different on the wings of the three section unit (e.g., grooming devices 200b and 200c being the wings) such as shown in FIG. 18 to eliminate the additional sprockets, as ground clearance may not be needed there. In some embodiments, a pulley and belt(s) mechanism can be used instead of a chain and sprocket system 260, in addition to either a spring tensioner or needing adjustments every time the brush height is adjusted, for example.

As used herein, a drive wheel can be simply a wheel that does not drive brush 230 or can be a wheel that does drive brush 230. In some embodiments, only one drive wheel 300 is connected to a brush 230 to drive rotation of brush 230.

In some embodiments, brush 230 (e.g., ground driven rotary brush), such as via chain and sprocket system 260, is used to decompact and distribute infill, while correcting turf fibers vertical. Turf grooming system 100 includes three rotary brushes 230, each in a separate grooming device 200a, 200b, and 200c, according to some embodiments. In some embodiments, each brush 230 is also configured to flick the infill and debris up into baskets of debris collection assembly 220, where the interchangeable assembly comprises debris collection assembly 220. In some embodiments, interchangeable units of interchangeable assembly enable deep grooming (e.g., using tine assembly 240), or surface cleaning (e.g., using debris collection assembly 220).

In some embodiments, a magnet assembly 210 is included with one or more or each grooming device 200 and usable for metallic object cleaning, such as by attracting and holding metallic objects on or in a surface when grooming device 200 is moved over the surface. Each brush 230 (e.g., ground driven rotary brush) is configured to provide a constant brush speed relative to the ground speed, to help prevent brushes 230 from rotating in one spot without a vehicle moving (potentially damaging the surface, such as turf, on which grooming device 200 is moved).

In some embodiments, magnet assembly 210 is a magnet bar that extends across the rear end of grooming device 200. In some embodiments, magnet assembly 210 comprises one or more magnets that are not in a bar configuration. For example, the magnets can be spaced along the rear end of grooming device 200.

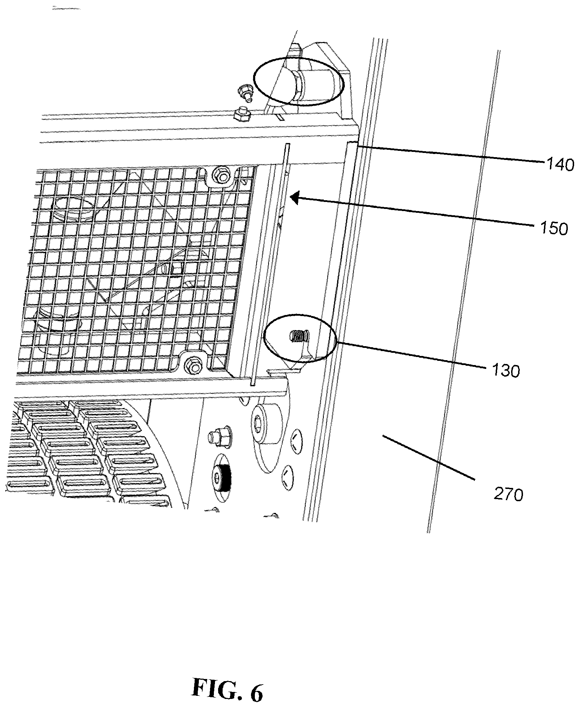

FIG. 6 shows an example interchangeable assembly, in accordance with some embodiments, such as tine assembly 240 or debris collector unit 220, featuring a plate 150 that hooks into a stud 130 of frame 270 of grooming device 200. The interchangeable assembly pivots about stud 130 until an attachment mechanism 140, such as a spring-loaded pin, locks the top/rear of the interchangeable assembly. Attachment mechanism 140 can include securement knob(s) that can be tightened to hold the interchangeable assembly tightly to the frame 270 of grooming device 200.

In some embodiments, various units can be interchanged, added, and/or omitted from the turf grooming system 100 as otherwise described herein. These units can comprise an assembly, each having a hook that pivots on a shoulder bolt stud on each side of the frame, where a spring-loaded pin engages when pivoting the assembly into place. Other attachment mechanisms can be used, in various embodiments.

The manner of connection of the assemblies (e.g., interchangeable assembly) helps facilitate access to the assemblies from the bottom side when raising the unit vertical.

In some embodiments, turf grooming system 100 includes a vibrating motor connectible to interchangeable assembly. Vibrating motor can be a motor that causes vibration or other movement in the interchangeable assembly, such as to facilitate turf grooming or cleaning. For example, vibrating motor is connectible to a power source (e.g., 12V) and used for the electric actuators for lifting. Vibrating motor is configured to vibrate a sieve screen of debris collection assembly 220 to filter debris. Such vibration can facilitate infill falling through a filtration screen of debris collection assembly 220. For example, the vibration of the debris collected in the debris collection assembly 220 can help level, sort, and/or mix the debris held in debris collection assembly 220 to allow for more even distribution of debris in collection basket(s) 224 so as to help enable retention of additional debris collected, such as by sweeping of debris at the turf surface by brush 230. In some embodiments, vibrating motor is omitted.

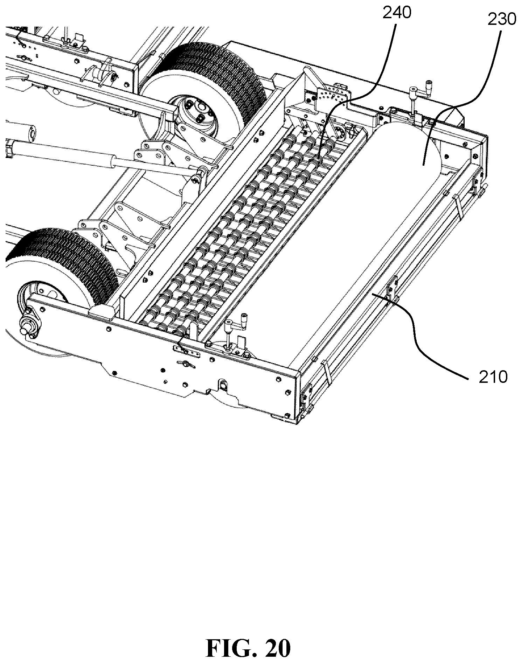

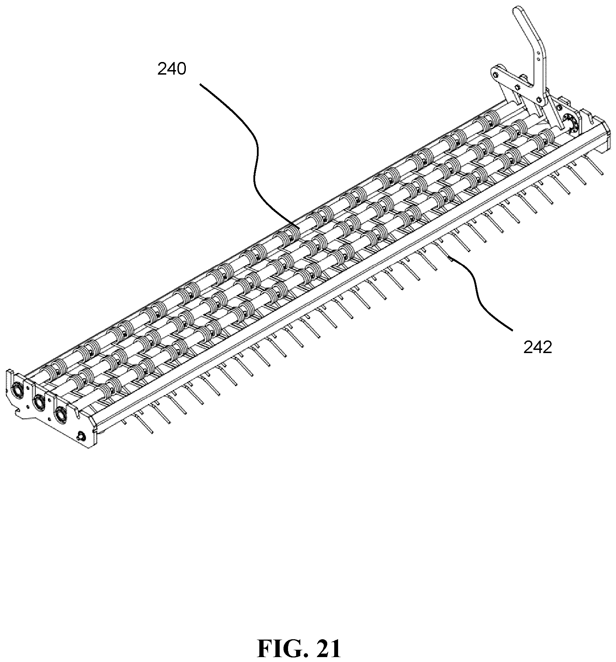

In some embodiments, interchangeable assembly is tine assembly 240. FIG. 20 shows an example tine assembly 240, according to some embodiments. In some embodiments, each tine is connectible to a rod which rotates to change the height of the tine tips to control engagement. The rods are rotated by a common handle connected with a bar mechanism, and held in position with a pin at tine assembly 240. Tine assembly 240 can include one or more rows each defined by a rod connected to tines, for example. This can facilitate specialized or improved grooming of a surface, such as turf, for example. FIG. 20 shows an example tine assembly 240, according to some embodiments. FIG. 21 shows tine assembly 240 with tines 242 in an up position. FIG. 22 shows tine assembly 240 with tines 242 (e.g., tine rows 242a, 242b, and 242c) in a down position. In some embodiments, a different number of tines 242 (e.g., a different number of rows, a different number of tines in each row), a different configuration and positioning of tines in tine assembly 240, and/or a different design or shape of each tine 242 are used. In some embodiments, tines 242 are for deep grooming (e.g., aggressive decompaction), which can be utilized more on older fields such as a few times a year. Tines 242 are configured to loosen the infill deeply to also help facilitate brush grooming of infill (e.g., decompaction and leveling). Tines 242 are configured in an up position when not in use, and configured in a down or lowered position when in use. The engagement depth of tines 242 with the surface is controlled by the various holding pin holes or other mechanical attachment. An operator can set the desired level of engagement to set the level of aggressiveness of decompaction such as according to the infill depth which may vary by surface or use, for example. The level of aggressiveness or use or engagement of tines 242 with the surface can contribute to tine 242 wear over time.

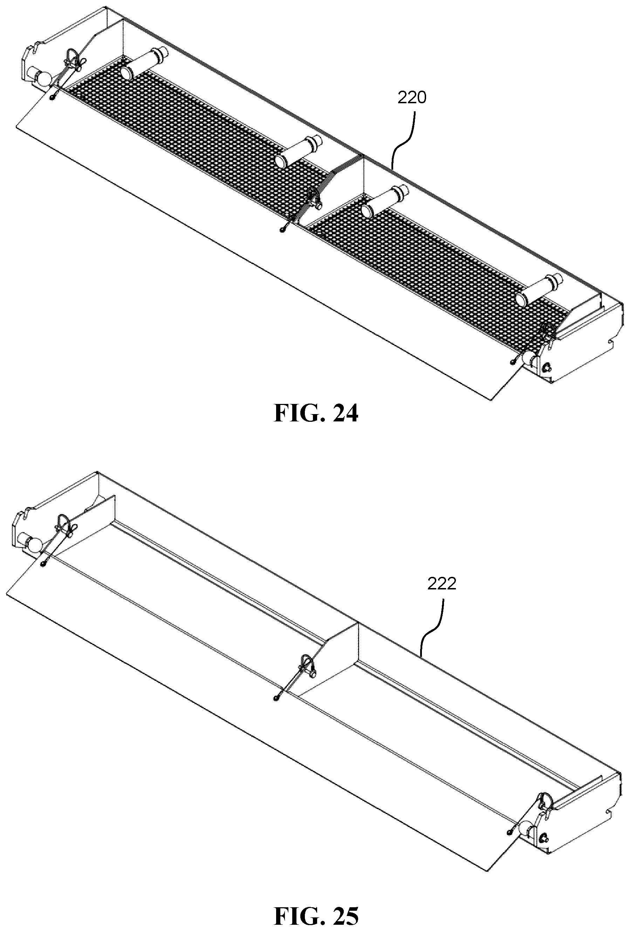

In some embodiments, interchangeable assembly is debris collector assembly 220. FIG. 24 shows debris collector assembly 220, according to some embodiments. Debris collector assembly 220 includes a debris collector frame 222 (such as shown in FIG. 25) and one or more collection baskets 224 (such as shown in FIG. 26) configured to hold debris. Brush 230 is configured to direct debris retrieved from a surface over which brush 230 is applied to debris collection basket(s) 224, according to some embodiments. In some embodiments, this is facilitated by a ramp included in debris collector assembly 220 facing brush 230 and angled downward towards the surface, such as shown in FIG. 24.

FIG. 23 shows a debris collector frame 222 without collection baskets 224. A vibrating motor can be connected to debris collector frame 222. This vibrating motor is configured to vibrate debris collector assembly 220 to facilitate collection and retention of debris in the collection baskets 224. In some embodiments, vibrating motor is omitted. FIG. 26 shows an example collection basket 224, according to some embodiments. Collection basket 224 can include various features, such as screws attached to left and right sides, to facilitate attachment to frame 270 of grooming device 200. In some embodiments, collection basket 224 includes handles, which can be L-shaped, for example. Other handle designs can be used. Basket 224 is removable from debris collector assembly 220 by releasing the pins show in FIG. 26, and then carried out to remove and dump debris collected. Other mechanisms of attachment can be used in place of or in addition to the pins. This detachment ability provides a lighter and quicker method for cleaning or detachment than removing the full debris collector assembly 220.

FIG. 28 illustrates an example grooming device 200, according to some embodiments. As shown, grooming device 200 includes a debris collector 220, brush 230, and magnet assembly 210. Brush 230 is configured to rotate forward (i.e., the bottom of brush 230 travels in the direction of travel (towards the left in this image)), according to some embodiments. In some embodiments, this is enabled by chain and sprocket system 260. In some embodiments, another mechanism is used.

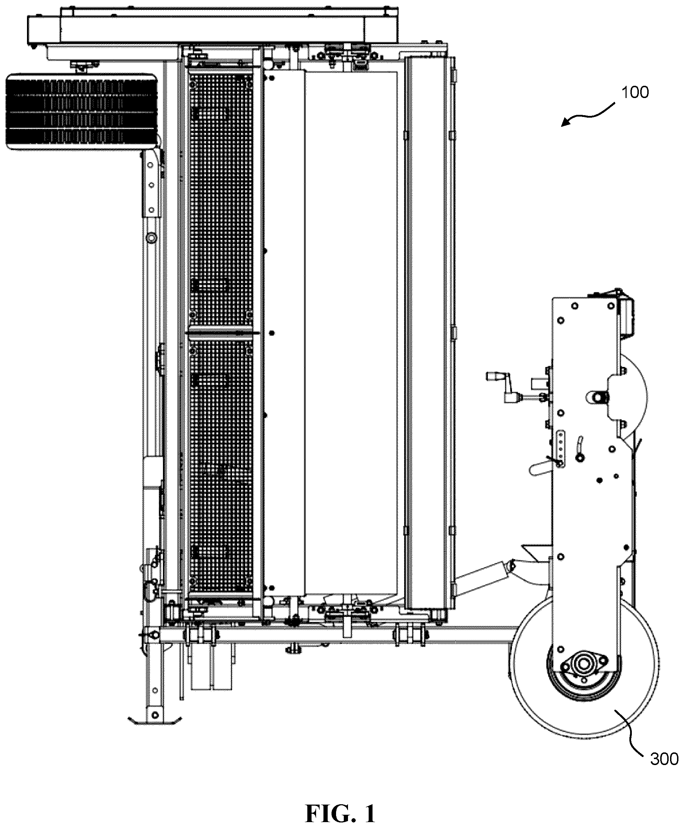

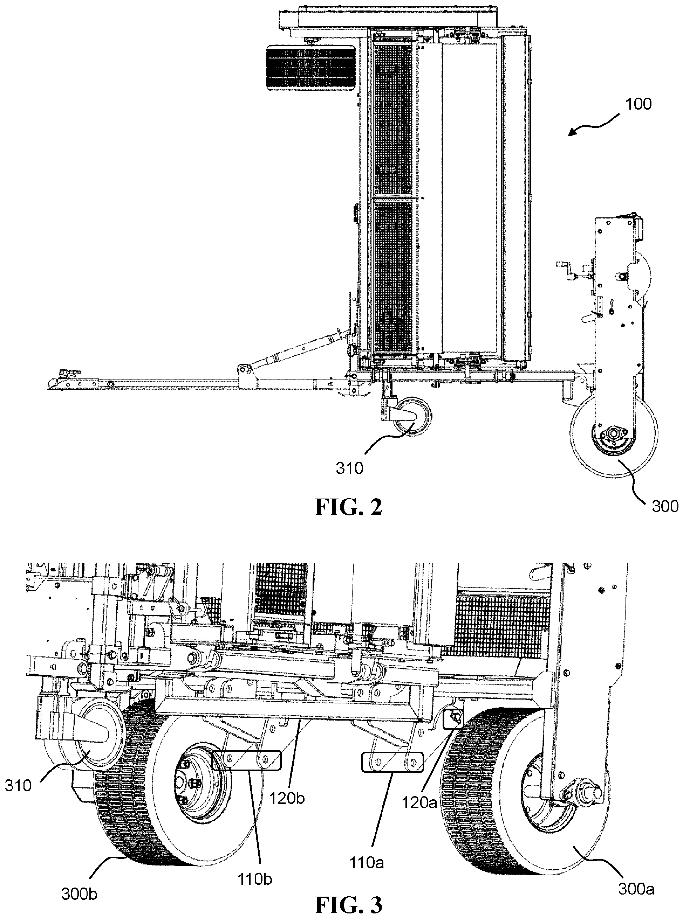

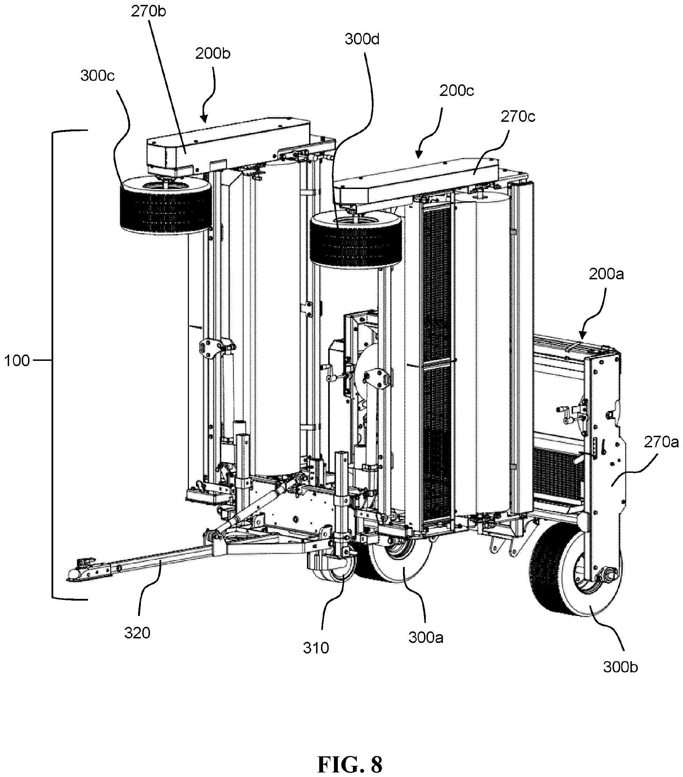

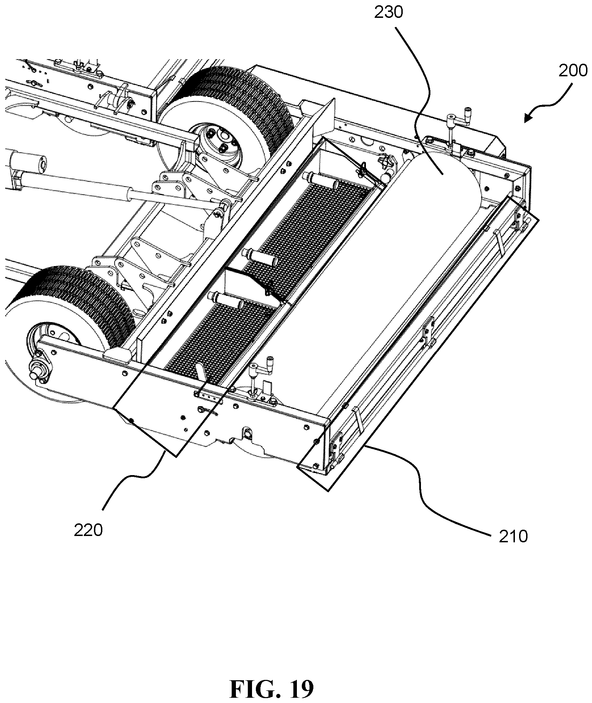

FIGs. 18 and 19 show an example turf grooming system 100 having three grooming devices 200 (shown as 200a, 200b, and 200c in FIG. 18). Each grooming device 200 shown has a magnet assembly 210 at the rear of the grooming device, a debris collector 220 forward of the magnet assembly 210, and a brush 230 positioned between the magnet assembly 210 and the debris collector 220. In some embodiments, debris collector 220 is instead replaced with tine assembly 240. Rear grooming device 200a is positioned at the back of turf grooming device 100 relative to the position of side grooming devices 200b and 200c. In the embodiment shown, side grooming devices 200b and 200c are positioned in front of rear grooming device 200a, with 200b and 200c aligned along the same axis as each other and extending further to the right and further to the left, respectively, compared to rear grooming device 200a. In the embodiments shown, each grooming device 200 are positioned such that each brush 230 of each grooming device 200 enable each brush 230 to be engageable with at least a different portion of the surface. However, in some embodiments, at least two brushes 230 are carried over an overlapping portion of the surface on which turf grooming device 100 is moved over during operation. As shown, each grooming device 200c and 200b only have one drive wheel 300 each positioned at an outer side of the respective grooming device 200. This is enabled as drive wheels 300a and 300b of rear grooming device 200a are positioned to align with an interior side grooming devices 200b and 200c as shown according to some embodiments. Each grooming device 200b and 200c are configured to pivot on the midframe of turf grooming system 100 between a vertical shipping position as shown in FIGs. 2 and 8 and a horizontal operational position as shown in FIG. 18, according to some embodiments. FIGs. 2 and 8 show turf grooming system 100 in a transport position. In the shipping position, the pivot location is switched and the midframe is lower relative to the ground when folded up (as shown in FIG. 1). Electric actuators can be used to fold the grooming devices 200a, 200b, and 200c into the vertical shipping configuration. The electric actuators can be powered through 12V provided by a tow vehicle, for example.

In some embodiments, turf grooming system 100 is operated by using a standard utility vehicle or light duty tractor to pull turf grooming system 100 via attachment at drive connector 320, only requiring a 12-volt power source and adequate towing capacity. Advantageously, according to some embodiments, there is no risk of hydraulic fluid spilling from turf grooming system 100 and wrecking the turf. In some embodiments, drive wheels 300 of a particular grooming device 200 are positioned in front of that grooming device 200 (e.g., including tine assembly(ies) 240, debris collector unit(s) 220, brush(es) 230) so as to allow for the drive wheels 300 to not drive on a groomed surface. This advantageously prevents further undesired compaction, according to some embodiments. In some embodiments, brushes 230 are adjustable in height to accommodate various infill depths and field use.

In some embodiments, turf grooming system 100 includes three (or more) grooming devices 200 each including frames 270, such that turf grooming system 100 is configurable to provide a large working width, to minimize grooming time which is crucial for event turnover (e.g., changing from football to a concert and back). According to some embodiments, this allows consumers to maximize field use, reduce labour needs for turf maintenance, and/or increase turf maintenance frequency for prolonged turf life, while also optimizing field safety and performance. Where turf grooming system 100 is a larger unit including more than one grooming device 200, turf grooming system 100 can be folded up for transportation and storage. Turf grooming system 100 is configurable as a smaller unit (e.g., including a sole grooming device 200) as an alternative to a system having multiple grooming devices 200 (e.g., three brush machines) depending on facilities requirements and budget.

No other turf groomer that is multi-functional is comparable to the size of the full working width of turf grooming system 100 where it comprises at least three grooming devices 200 in the configuration similar to that shown in FIG. 18.

FIGs. 1 and 2 show side elevation views of an example turf grooming system 100, according to some embodiments. Turf grooming system 100 includes one or more grooming devices 200, such as grooming devices 200a, 200b, and 200c as shown in FIG. 8. The additional grooming devices 200b and 200c shown can have drive wheels 300c and 300d, respectively, as shown, and be positioned as left and right side wings relative to a central rear grooming device 200a such as shown in FIG. 18. As shown in FIGs. 1 and 2, turf grooming system 100 is foldable to allow for a lower overall height when in a shipping configuration. Specifically, FIGs. 1 and 2 show turf grooming system 100 in a shipping configuration with a drive connector 320 in a shipping configuration in FIG. 1 and in an operational configuration in FIG. 2, and FIG. 18 shows the turf grooming system 100 in an operational configuration, according to some embodiments where turf grooming system 100 comprises a rear grooming device 200a, as well as a left side grooming device 200b and a right side grooming device 200c each positioned in front of the rear grooming device 200a according to the direction of travel. FIG. 2 also shows a further wheel 310, which is a trailer jack (adjustable in height). In some embodiments, wheel 210 is moved to the hitch. Similarly, FIG. 14 shows a grooming device 200 in an operational configuration, while FIG. 15 shows the grooming device 200 in a shipping configuration, according to some embodiments where turf grooming system 100 comprises only one grooming device 200. In some embodiments, the operational configuration is a horizontal position. In some embodiments, the shipping configuration is a vertical position.

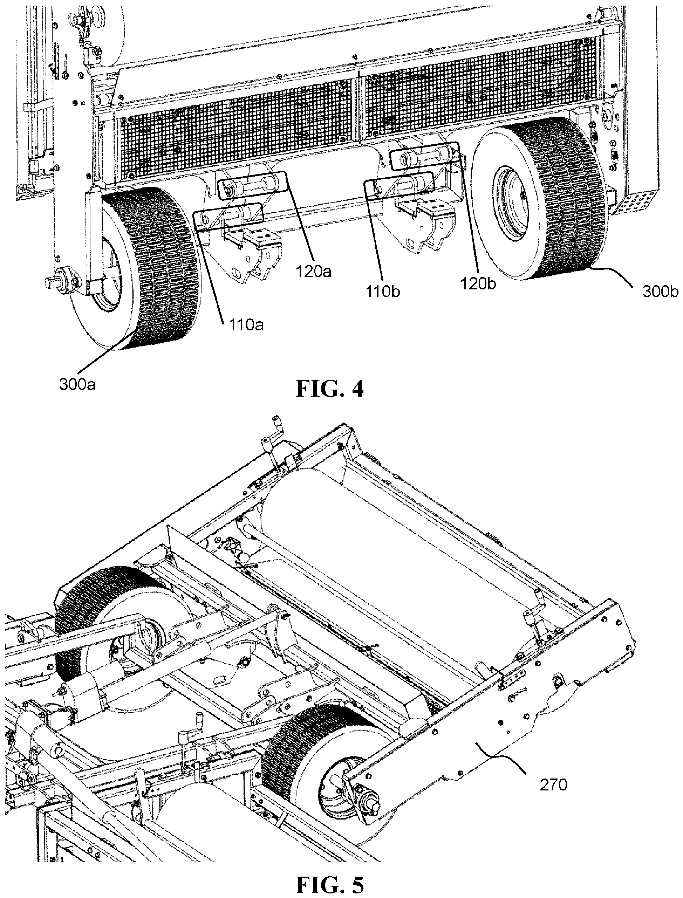

In some embodiments, the pivoting of the grooming device 200 transitions the grooming device 200 between a horizontal position and a vertical position. Grooming device 200 can move from a horizontal position through to a vertical position and the various angled positions therebetween. This can allow for various interchangeable units to be replaced or cleaned more easily. For example, in some embodiments, the grooming device 200 is pivotable about a pivot point comprising a set of operational holes configured to receive operational pins upon which insertion allows the grooming device 200 to pivot about an axis (e.g., defined by the operational pins) into the operational configuration, and the pivot point comprising a set of shipping holes configured to receive shipping pins upon which insertion allows the grooming device 200 to pivot about an axis (e.g., defined by the shipping pins) into the shipping configuration. For example, the pivot point can include a shipping pivot point and an operational pivot point. The shipping pivot point can include shipping holes configured to receive shipping pins and the operational pivot point can include operational holes configured to receive operational pins. In some embodiments, there exists a position (such as shown in FIG. 5) where both the shipping pins and operational pins are inserted, and this position is used to swap the pins to fold to either shipping or transport positions.

FIG. 3 shows an example lifting and folding mechanism of a turf grooming system 100, according to some embodiments. In some embodiments, the lifting and folding mechanism is capable of raising the entire frame (mid-frame) of a grooming device 200 off the ground, raising that grooming device's 200 brush 230, magnet assembly 210, and tine assembly 240 or debris collection assembly 220 off the ground at the same time, with the use of the same wheels 300 (e.g., 300a, 300b) used for driving brush 230 (no additional wheels for lifting needed). For example, lifting and folding mechanism can use electric actuators or other suitable means. Raising the entire frame of a grooming device 200 is useful, as it allows grooming device to initially raise quickly a few inches to provide sufficient clearance (if useful for the application) while grooming (e.g., at the end of a pass to clear an edge of a running track). This minimizes the duty cycle usage on the lifting and folding mechanism, such as electric actuators. Multiple grooming devices 200 can be raised simultaneously, for example.

Utilization of the drive wheels 300 (e.g., 300a, 300b) for the lifting mechanism helps with stability, cost, accessibility for repairs, amongst other benefits.

In some embodiments, the lifting mechanism includes a secondary pivot point where pins can be switched out to have the complete machine folded up at a lower overall height, allowing for easy fitment into trucks/shipping containers while being fully assembled.

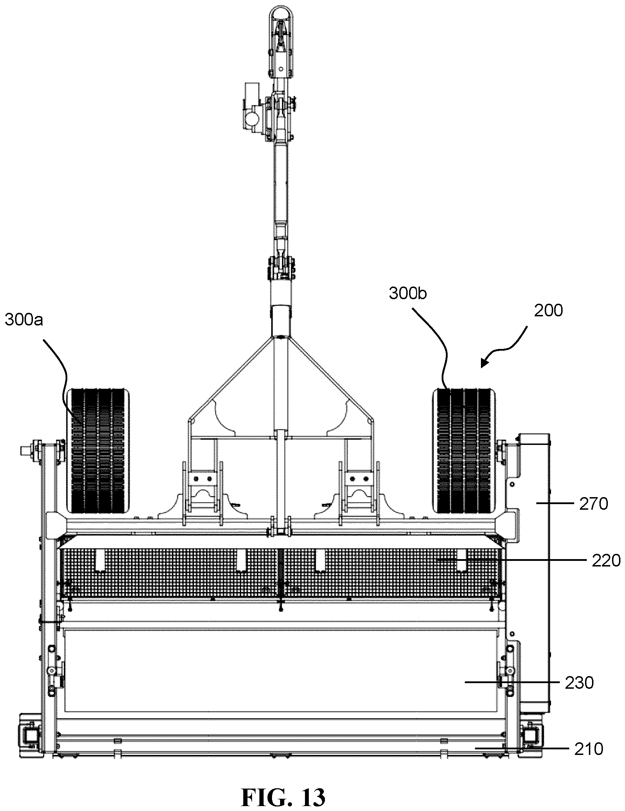

Each grooming device 200 (e.g., containing brush frame 270) can be folded to a vertical orientation, providing easy access to the bottom of the frame of grooming device 200. This makes it easy to interchange the tine assembly(ies) 240 and debris collection assembly(s) 220, as well as clean the magnet bars 210. This also creates a confined footprint, optimal for storage or shipping, making it economical to ship the unit fully assembled when folded up. In some embodiments, turf grooming system 100 includes a drive connector 320 drivingly connectible to the turf grooming system 100. For example, turf grooming system 100 further includes a drive connector 320 that can be configured to connect turf grooming system 100 to a drive system, such as a vehicle or a user. In some embodiments, turf grooming system 100 only includes one grooming device 200, and drive connector 320 is configured to attach to grooming device 200, such as shown in FIG. 13.

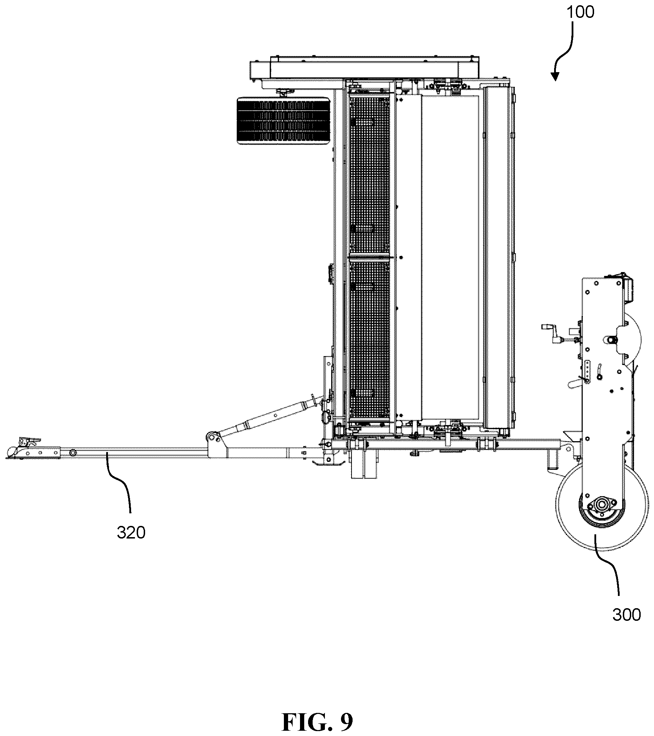

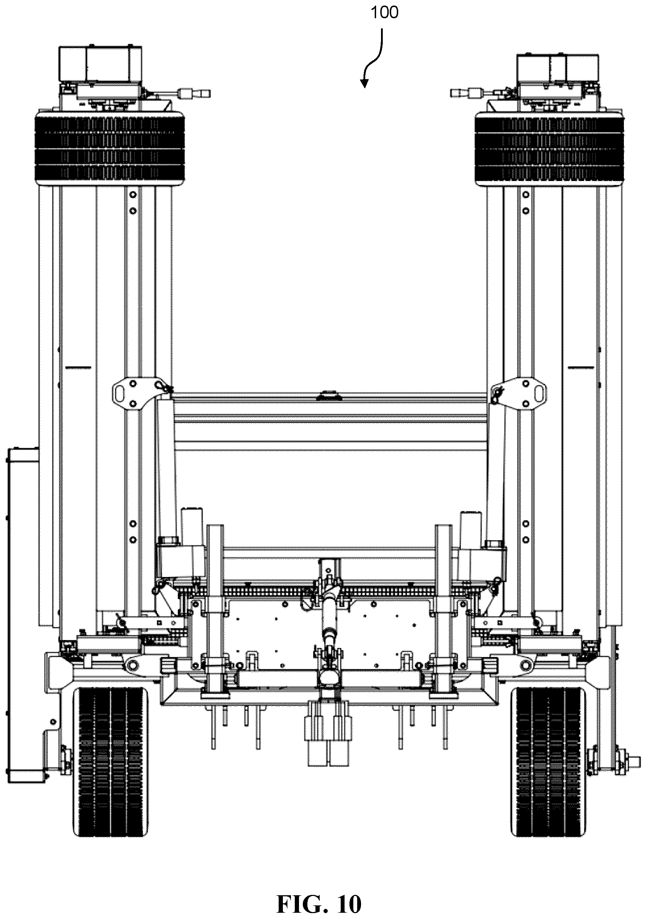

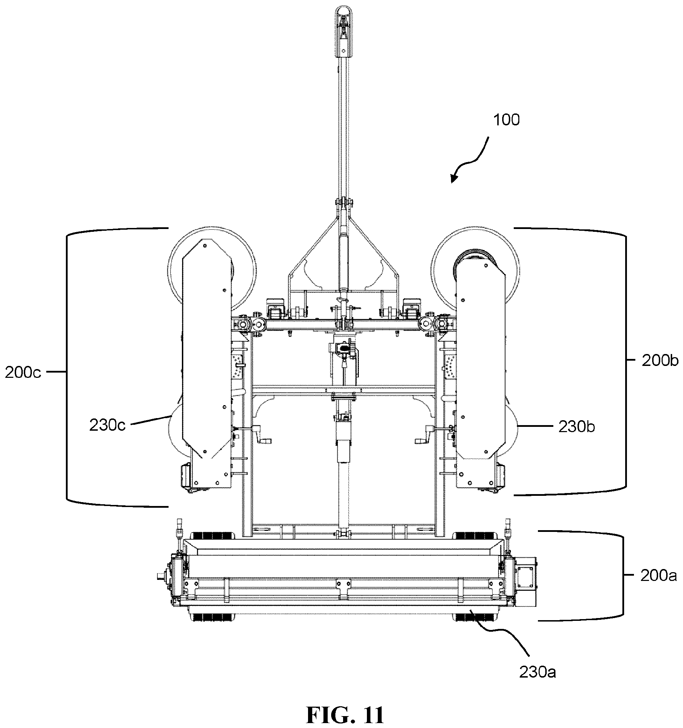

As illustrated at least at FIGs. 18, 11, and 8-10, the grooming device 200 (or rear grooming device 200a in some embodiments), such as specifically brush frame 270, pivots on a mid-frame of turf grooming system 100, being raised with an electric actuator to a vertical position. In some embodiments, the electric actuator(s) is connected to the frame of turf grooming system 100, such as the midframe for embodiments having three grooming devices 200a, 200b, and 200c, or connected to a hitch in embodiments having only a single grooming device 200. As shown in FIG. 5, the connection can be to brush frame 270. Each electric actuator is powered by a power source (e.g., 12V source) from the tow vehicle. In some embodiments, other actuators can be used. In some embodiments, this configuration consists of a rear frame (e.g., grooming device 200a) and two wings (grooming devices 200b and 200c) that pivot from a midframe. In some embodiments, the rear frame can be used as a single small unit with the proper drive connector 320 (e.g., a pulling adaptor (towing hitch or 3-pt hitch)), without the two wings comprising a grooming device 200b and grooming device 200c. As shown in FIG. 13, the same rear brush frame 230 can be used for a single smaller unit with a unique hitch or 3-point hitch adaptor for tractors. All tires (e.g., drive wheels 300) are kept in front of the brushes (e.g., rotary brush(es) 230) and tine assembly(ies) 240 to ensure the groomed surface is not driven on (compacted further), according to some embodiments.

As shown in FIG. 3, in some embodiments, the brush frame 270 of a grooming device 200 (e.g., rear grooming device 200a) has two pivot locations. Normal operation occurs with pins (also referred to as operational pins) in the operational holes 120a, 120b, whereas the shipping holes 110a and 110b show the pin location for the shipping configuration, and shipping holes 110a and 110b are configured to receive pins (also referred to as shipping pins). The insertion of pins into the respective holes allow a grooming device 200 to pivot about an axis defined by the pin locations, in some embodiments.

FIG. 4 shows an example embodiment where the pins are positioned in the shipping configuration, that is, in shipping holes 110a and 110b.

To switch between configurations, as shown in FIG. 5, the grooming device 200 (e.g., rear grooming device 200a) is partially lowered from the shipping configuration until the operation holes 120a, 120b line up so alternative pins can fit in and the shipping pins are removed. This configuration advantageously allows the unit to be easily switched between configurations without disconnecting the electric actuator. In some embodiments, the electric actuator is connected with one end on the midframe and the other end on brush subframe 270 as shown in FIG. 5.

In some embodiments, the lifting and folding mechanism of the turf grooming system 100 confers many advantages, with the ability to use a separate attachment (hitch) for the rear grooming device 200a to be used without side grooming devices 200b or 200c as a smaller unit. This lifting and folding mechanism can also be advantageously used for raising a ground driven brush 230 or other components within grooming device 200 without using additional actuators, according to some embodiments. The interchangeable assembly within a grooming device 200 can be quickly interchanged, and grooming device 200 can be lifted to a vertical position to make it easy to interchange the interchangeable assembly. Grooming device 200 can be folded to a confined space for easy transport, storage, or shipping, and making loading on a trailer easier (e.g., providing more ground clearance for uneven surfaces). Advantageously, instead of raising the brush 230 (or other components of grooming device 200) by pivoting the grooming device 200 about the drive wheel axis, grooming device 200 is pivotable about a different axis to either raise (e.g., for normal operation) or lower (e.g., for confined shipping) the entire grooming device 200. In particular, the different axis is defined by the pivot point, which can comprise a set of shipping holes configured to receive shipping pins and a set of operational holes configured to receive operational pins, upon which insertion permits grooming device 200 to pivot about an axis defined by the pins. In addition, as grooming device 200 is configured to fold vertically when in a shipping configuration, a two-chain drivetrain (or gears and chain) can be employed for driving brush 230 to create more ground clearance (e.g., without requiring the use of oversized wheels), according to some embodiments. In some embodiments, this chain drive design allows the brush 230 height to be adjusted without a spring tensioner, or the need to re-tension the chain with every adjustment.

In some embodiments, there is provided a method for grooming turf, the method including: providing decompaction of the turf by brushing; providing deep grooming of the turf or surface cleaning of the turf or both; and providing an attractive force magnetically over a turf; by driving a single vehicle, such as a grooming device 200 or turf grooming system 100. In some embodiments, the deep grooming and the surface cleaning are both provided by the driving of the single vehicle. For example, the attractive force can be provided by a magnet assembly 210, such as a magnet bar attached to a rear portion of a grooming device 200. The decompaction of the turf by brushing can be provided by brush 230 of a grooming device 200.

The deep grooming of the turf can refer to decompaction of and/or engagement with the turf below the surface level, such as by engagement by tines 242 of a tine assembly 240 a distance below the surface of the turf. In some embodiments, the deep grooming is by lifting the turf beneath a surface of the turf. This can be by moving tine assembly 240 over the turf and allowing tines 242 to reach beneath the surface and slightly lift (e.g., decompact and/or align the turf fibers) the turf as the tines 242 engage and disengage with the turf fibers as the tine assembly 240 is moved across the turf surface.

The surface cleaning of the turf can be provided by debris collection assembly 220 of a grooming device 200. The driving of the single vehicle can comprise pulling a turf grooming system 100 and/or grooming device 200, such as by attaching the turf grooming system 100 and/or the grooming device 200 to a driver such as a truck and driving the truck forward. A different driving method can be used in various embodiments. For example, driving of the single vehicle can refer to a user pulling turf grooming system 100 and/or grooming device 200.

For example, the surface cleaning can include the brushing by brush 230. For example, while brush 230 is moved across the turf and performs the decompaction of the turf, the same brushing motion by brush 230 can sweep debris at the surface of the turf into debris collection assembly 220. Debris collection assembly 220 can facilitate collecting of debris at the surface of the turf.

In some embodiments, the turf is driven over by the vehicle (e.g., turf grooming system 100 and/or grooming device 200) in the same direction as the brushing of the turf. This can be facilitated by a chain and sprocket system 260 connecting a drive wheel 300 of a grooming device 200 with the brush 230 being a rotary brush, such that the movement of the drive wheel 300 at the bottom of the drive wheel is opposite in direction to the movement of the brush 230 at the bottom of the brush 230.

In some embodiments, the surface cleaning comprises vibrating debris collected. This can be by attaching a vibrating motor 250 to a debris collection assembly 220.

In some embodiments, the method includes adjusting a height over the turf at which the brushing is performed. For example, a grooming device 200 can be pivoted partway about a pivot point relative to a midframe or other component of turf grooming system 100. This can lift the grooming device 200 relative to the surface (e.g., turf).

In some embodiments, the vehicle is pivoted between a horizontal operational position and a vertical shipping position. For example, the pivoting can be about a pivot point. The pivot point can include a shipping pivot point and an operational pivot point. This can be provided by two sets of holes each configured to receive respective pins which upon insertion allow the vehicle to be pivoted about a different pivot point.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, functions, operations, or steps, any of these embodiments may include any modification, combination or permutation of any of the components, elements, functions, operations, or steps described or illustrated anywhere herein that a person having ordinary skill in the art would comprehend. All such modifications, combinations and permutations are believed to be within the sphere and scope of the invention as defined by the claims appended hereto.

There now follows a series of clauses, not claims, setting out aspects of the invention:
Clause 1. A turf grooming system, comprising:
   at least one grooming device, each comprising a rotary brush and an interchangeable assembly, wherein the rotary brush is drivingly connectible to at least one drive wheel, wherein at least one of the at least one grooming device is liftable by pivoting about a pivot point.
Clause 2. The turf grooming system of clause 1, the interchangeable assembly comprises a tine assembly.
Clause 3. The turf grooming system of clause 1 or 2, the interchangeable assembly comprises a debris collection assembly.
Clause 4. The turf grooming system of any one of clauses 1 to 3, wherein each grooming device further comprises a frame and a magnet assembly, wherein the at least one drive wheel is positionable at a front end of the frame, the interchangeable assembly is positionable behind the at least one drive wheel, the rotary brush is positionable behind the interchangeable assembly, and magnet assembly is positionable behind the rotary brush, wherein the at least one drive wheel comprises a first drive wheel connectible to a side of the frame and a second drive wheel connectible to an opposite side of the frame.
Clause 5. The turf grooming system of any one of clauses 1 to 4, further comprising a drive connector drivingly connectible to the turf grooming system.
Clause 6. The turf grooming system of any one of clauses 1 to 5, a drive wheel connectible to the rotary brush via a chain and sprocket system configured to rotate the rotary brush in a direction opposite to a rotation of the drive wheel.
Clause 7. The turf grooming system of any one of clauses 1 to 6, further comprising a vibrating motor connectible to interchangeable assembly.
Clause 8. The turf grooming system of any one of clauses 1 to 7, the rotary brush raiseable relative to a surface over which grooming device is moved.
Clause 9. The turf grooming system of any one of clauses 1 to 8, wherein the pivoting of the grooming device transitions the grooming device between a horizontal position and a vertical position.
Clause 10. The turf grooming system of clause 9, wherein the pivot point comprises a shipping pivot point and an operational pivot point.
Clause 11. The turf grooming system of clause 10, wherein the shipping pivot point comprises shipping holes configured to receive shipping pins and the operational pivot point comprises operational holes configured to receive operational pins.
Clause 12. A method for grooming turf, comprising:
   providing decompaction of the turf by brushing;
   providing deep grooming of the turf or surface cleaning of the turf or both; and
   providing an attractive force magnetically over a turf;
   by driving a single vehicle.
Clause 13. The turf grooming method of clause 12, the deep grooming being by lifting the turf beneath a surface of the turf.
Clause 14. The turf grooming method of clause 12 or 13, the surface cleaning comprising the brushing and collecting of debris at the surface of the turf.
Clause 15. The turf grooming method of any one of clauses 12 to 14, wherein the turf is driven over by the vehicle in the same direction as the brushing of the turf.
Clause 16. The turf grooming method of any one of clauses 12 to 15, wherein the surface cleaning comprises vibrating debris collected.
Clause 17. The turf grooming method of any one of clauses 12 to 16, further comprising adjusting a height over the turf at which the brushing is performed.
Clause 18. The turf grooming method of any one of clauses 12 to 17, further comprising pivoting the vehicle between a horizontal operational position and a vertical shipping position.
Clause 19. The turf grooming method of clause 18, wherein the pivoting is about a pivot point and the pivot point comprises a shipping pivot point and an operational pivot point.

## Claims

1. A turf grooming system, comprising:
at least one grooming device, each comprising a rotary brush and an interchangeable assembly, wherein the rotary brush is drivingly connectible to at least one drive wheel, wherein at least one of the at least one grooming device is liftable by pivoting about a pivot point.

2. The turf grooming system of claim 1, the interchangeable assembly comprises a tine assembly.

3. The turf grooming system of claim 1 or 2, the interchangeable assembly comprises a debris collection assembly.

4. The turf grooming system of any one of claims 1 to 3, wherein each grooming device further comprises a frame and a magnet assembly, wherein the at least one drive wheel is positionable at a front end of the frame, the interchangeable assembly is positionable behind the at least one drive wheel, the rotary brush is positionable behind the interchangeable assembly, and magnet assembly is positionable behind the rotary brush, wherein the at least one drive wheel comprises a first drive wheel connectible to a side of the frame and a second drive wheel connectible to an opposite side of the frame.

5. The turf grooming system of any one of claims 1 to 4, further comprising a drive connector drivingly connectible to the turf grooming system.

6. The turf grooming system of any one of claims 1 to 5, a drive wheel connectible to the rotary brush via a chain and sprocket system configured to rotate the rotary brush in a direction opposite to a rotation of the drive wheel.

7. The turf grooming system of any one of claims 1 to 6, further comprising a vibrating motor connectible to interchangeable assembly.

8. The turf grooming system of any one of claims 1 to 7, the rotary brush raiseable relative to a surface over which grooming device is moved.

9. The turf grooming system of any one of claims 1 to 8, wherein the pivoting of the grooming device transitions the grooming device between a horizontal position and a vertical position.

10. The turf grooming system of claim 9, wherein the pivot point comprises a shipping pivot point and an operational pivot point; and optionally
wherein the shipping pivot point comprises shipping holes configured to receive shipping pins and the operational pivot point comprises operational holes configured to receive operational pins.

11. A method for grooming turf, comprising:
providing decompaction of the turf by brushing;
providing deep grooming of the turf or surface cleaning of the turf or both; and
providing an attractive force magnetically over a turf;
by driving a single vehicle.

12. The turf grooming method of claim 11, the deep grooming being by lifting the turf beneath a surface of the turf.

13. The turf grooming method of claim 11 or 12, the surface cleaning comprising the brushing and collecting of debris at the surface of the turf; and/or
wherein the turf is driven over by the vehicle in the same direction as the brushing of the turf.

14. The turf grooming method of any one of claims 11 to 13, wherein the surface cleaning comprises vibrating debris collected; and/or
further comprising adjusting a height over the turf at which the brushing is performed.

15. The turf grooming method of any one of claims 11 to 14, further comprising pivoting the vehicle between a horizontal operational position and a vertical shipping position; and optionally wherein the pivoting is about a pivot point and the pivot point comprises a shipping pivot point and an operational pivot point.
